# EUROPÄISCHE PATENTSCHRIFT

(11) **EP 1 316 482 B1**
(45) Veröffentlichungstag und Bekanntmachung des Hinweises auf die Patenterteilung: **20.07.2005**
(21) Anmeldenummer: 02026134.3
(22) Anmeldetag: 23.11.2002
(51) Int. Cl.: B60R 21/20

(54) **Airbagmodul für Kraftfahrzeuge**
Airbag module for motor vehicles
Module airbag pour véhicules à moteurs

(30) Priorität: 30.11.2001 DE 10158918
(43) Veröffentlichungstag der Anmeldung: 04.06.2003
(73) Patentinhaber: ADAM OPEL AG, 65423 Rüsselsheim (DE)
(72) Erfinder: Rick, Ulrich, Dipl.-Ing., 55595 Roxheim (DE)

(56) Entgegenhaltungen:
- EP-A- 1 088 711
- WO-A-99/46151
- DE-A- 19 750 443
- DE-U- 29 813 162

## Beschreibung

Die Erfindung betrifft ein Airbagmodul für Kraftfahrzeuge gemäß dem Oberbegriff des Patentanspruches 1.

Es sind derartige Airbagmodule allgemein bekannt in ihrer Funktion als Rückhaltesystem bei Unfällen, wobei ein im Modul zusammengefalteter Airbag von einem integrierten Gasgenerator mit Diffusor zur Gasverteilung aufgeblasen wird.

Ein solches Airbagmodul ist in der DE 197 50 443 A1 und in der gattungsbildenden EP 1 088 711 A beschrieben. Bei diesem Airbagmodul ist der Rand der Öffnung des Airbags unlösbar mit dem Rand der Einblasöffnung des Airbagmodulgehäuses verschweißt oder verklebt.

Es ist hierbei nachteilig, dass sich der obere Rand des Airbagmodulgehäuses, welcher die Einblasöffnung bildet, unter dem für den Schweißprozess erforderlichen Anpressdruck elastisch verformt. Dadurch ist ein sicherer Schweißvorgang nicht gewährleistet und es besteht die Gefahr einer fehlerhaften Befestigung des Airbags am Airbagmodulgehäuse. Es könnte in diesen Fällen zu einer Ablösung des Airbags vom Airbagmodulgehäuse im Auslösefall kommen, wodurch dessen lebensrettende Funktion nicht gewährleistet wäre.

Der Erfindung liegt die Aufgabe zugrunde, ein Airbagmodul für Kraftfahrzeuge zu schaffen, welches die genannten Nachteile vermeidet und eine einfache und betriebssichere Befestigung des Airbags am Airbagmodulgehäuse ermöglicht.

Die Lösung dieser Aufgabe erfolgt erfindungsgemäß durch ein Airbagmodul mit den Merkmalen des Anspruchs 1.

Es ist hierbei vorgesehen, dass die Schweiß-oder Klebeflächen am Airbagmodulgehäuse in einem vom Öffnungsrand der Airbagkammer abgewandten und im Bereich des Bodens der Airbagkammer eine hohe Steifigkeit aufweisenden Übergangsbereich angeordnet sind. Bei dem Übergangsbereich handelt es sich dabei um einen wannenartig gekrümmten Bereich zwischen den Seitenwänden und dem Boden der Airbagkammer oder um einen zwischen der Airbagkammer und einer der Airbagkammer benachbarten Gasgeneratorkammer befindlichen Bereich. Der Rand der Einblasöffnung des Airbags wird in diesem stabilen Übergangsbereich befestigt.

Zum einen wird hiermit erreicht, dass es durch die Anordnung der Schweiß- oder Klebeflächen in diesem Übergangsbereich zu keiner elastischen Verformung des Airbagmodulgehäuses beim Schweißvorgang kommen kann.

Zum anderen wird durch eine derartige Anordnung der Schweiß- oder Klebeflächen bewirkt, dass die Schweiß- oder Klebeverbindungen im Auslösefall des Airbags lediglich durch Scherkräfte beansprucht werden, wodurch einem möglichen Ablösen des Airbags vom Gehäuse ebenfalls entgegengewirkt wird.

Es wird daher durch die erfindungsgemäße Gehäuseausgestaltung in Verbindung mit der Anordnung der Schweiß- oder Klebeflächen im Übergangsbereich eine wesentliche Verbesserung der Airbagbefestigung am Airbagmodulgehäuse geschaffen, welche eine serienmäßige Fertigung bei hohen Qualitätsanforderungen und geringen Ausschussraten ermöglicht. Die Erfindung ist somit Voraussetzung für eine Anwendung der Schweiß- oder Klebetechnik für die Befestigung des Airbags am Airbagmodulgehäuse.

Die Schweiß- oder Klebestellen sind außenseitig am Airbagmodulgehäuse im insbesondere in einer Richtung quer zur Entfaltungsrichtung steifen Übergangsbereich angespritzt. Sie sind planar ausgebildet und weisen eine eben strukturierte Oberfläche auf. Die Struktur der Oberfläche, beispielsweise der Schweißstelle, bewirkt hierbei eine bessere Verbindung des Airbaggewebes mit dem Airbagmodulgehäuse, da die strukturierte Oberfläche eine erhöhte Kontaktfläche mit dem Airbaggewebe aufweist und der Schmelzpunkt des Materials schneller und gleichmäßiger erreicht wird. Es sind als Struktur der Oberfläche Riffelung oder Waffelung vorgesehen, wobei die Waffelung eine weiter verbesserte Verbindung durch zusätzlich vergrößerte Kontaktstellen bewirkt.

Die Seitenwände der Airbagkammer erstrecken sich im Bereich des Öffnungsrandes der Airbagkammer etwa parallel zur Entfaltungsrichtung. Bei einer vorteilhaften Ausgestaltung der Erfindung sind außenseitig an diesen Seitenwänden Halterungsfortsätze mit Fortsatznasen angebracht. Diese Halterungsfortsätze durchgreifen beim Befestigungsprozess des Airbags am Airbagmodulgehäuse entsprechende Öffnungen im Airbag und bewirken damit, dass der Airbag eine definierte Position beispielsweise beim Schweißvorgang einnimmt und beibehält. Auf diese Weise kann zum einen eine genaue und reproduzierbare Platzierung des Airbags für den Befestigungsprozess erreicht werden, wodurch eine weitere Normierung in der Serienfertigung und somit eine konstante Qualität der Verbindung sichergestellt wird.

Zum anderen bewirken die Halterungsfortsätze eine Vereinfachung des Befestigungsvorganges, da der Airbag nicht anderweitig in der gewünschten Befestigungsposition fixiert werden muss.

Des Weiteren wird durch die Halterungsfortsätze erreicht, dass der Airbag im oberen Bereich der Seitenwände am Gehäuse anliegt, wenngleich er lediglich im unteren Übergangsbereich zum Boden oder zur Gasgeneratorkammer am Airbagmodulgehäuse befestigt ist. Es wird hiermit eine günstige Richtungsvorgabe für die Krafteinwirkung auf die Befestigungsnaht am Airbagmodulgehäuse bewirkt.

Eine zusätzliche Verbesserung wird erreicht durch die Verwendung einer Schweißsonotrode mit waffelartig ausgebildeter Oberfläche. Diese hat gegenüber herkömmlichen Schweißsonotroden den Vorteil, dass der Schweißvorgang kontrollierter durchgeführt werden kann, da eine derart ausgebildete Schweißsonotrodenoberfläche aufgrund der geringeren Schweißkräfte eine definierte Materialaufschmelzung bewirkt und so eine geringere Eindringtiefe der Sonotrode verwirklicht werden kann. Die Gefahr einer elastischen Verformung des Airbagmodulgehäuses im Bereich der Schweißflächen kann somit zusätzlich verringert werden.

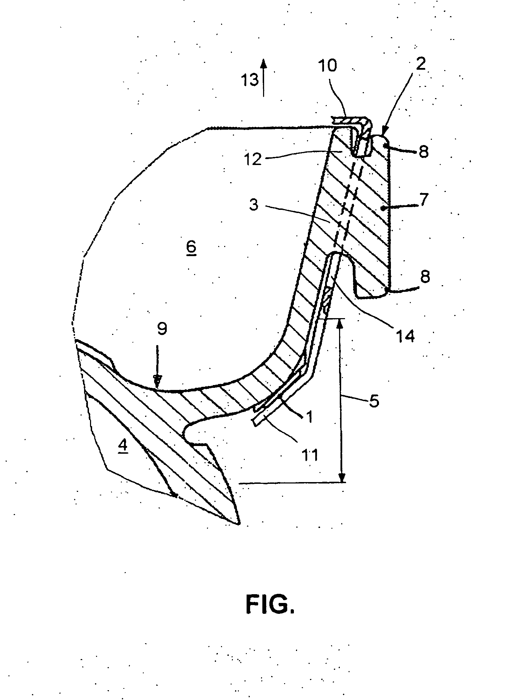

Nachfolgend wird ein Ausführungsbeispiel der Erfindung anhand einer Zeichnung näher beschrieben, deren einzige Figur einen Schnitt durch eine Seitenwand der Airbagkammer und den Übergangsbereich zur Gasgeneratorkammer des erfindungsgemäßen Airbagmodulgehäuses zeigt.

Das erfindungsgemäße Airbagmodulgehäuse 2, welches im Wesentlichen aus einer Airbagkammer 6 und einer den Gasgenerator und Diffusor aufnehmenden Gasgeneratorkammer 4 besteht, ist so ausgebildet, dass die in ihrem oberen Bereich nahe dem Öffnungsrand 12 in etwa senkrechten Seitenwände 3 in ihrem unteren Übergangsbereich 5 zum Boden 9 bzw. zur Gasgeneratorkammer 4 zum Airbagkammerinnenraum hin wannenartig gekrümmt sind und dabei in den Boden 9 übergehen.

Die Schweißflächen 1 zur Befestigung des Airbags 10 an der Außenseite des Airbagmodulgehäuse 2 sind in diesem gekrümmten Übergangsbereich 5 etwa in der Mitte in einem Winkel von etwa 45 Grad zur Senkrechten angeordnet.

Im oberen Bereich der Seitenwände 3 der Airbagkammer 6 ist außenseitig ein Halterungsfortsatz 7 angeordnet, welcher eine Aufnahmeöffnung 14 im Airbag 10 durchdringt, um den Airbag 10 in seiner Position zu fixieren. Der Halterungsfortsatz 7 weist hierfür sowohl ober- als auch unterseitig jeweils eine Fortsatznase 8 auf. Es ist hierbei zweckmäßig, mehrere Halterungsfortsätze 7 zum Eingriff in mehrere im Airbag 10 entsprechend angeordnete Aufnahmeöffnungen 14 an der Außenseite des Airbagmodulgehäuses 2 vorzusehen.

### Bezugszeichenliste

- Schweiß- oder Klebeflächen: 1
- Airbagmodulgehäuse: 2
- Seitenwände: 3
- Gasgeneratorkammer: 4
- Übergangsbereich: 5
- Airbagkammer: 6
- Halterungsfortsätze: 7
- Fortsatznasen: 8
- Boden: 9
- Airbag: 10
- Rand: 11
- Öffnungsrand: 12
- Entfaltungsrichtung: 13
- Aufnahmeöffnungen: 14

## Patentansprüche

1. Airbagmodul für Kraftfahrzeuge, mit einem Airbagmodulgehäuse (2), das eine Airbagkammer (6) für einen durch einen Gasgenerator zu einem Auffangkissen aufblasbaren Airbag (10) aufweist, wobei die Airbagkammer (6) in Entfaltungsrichtung (13) offen ausgebildet und der Rand (11) der Einblasöffnung des Airbags (10) außenseitig am Airbagmodulgehäuse (2) verschweißt oder verklebt ist, **dadurch gekennzeichnet, dass** die Schweiß- oder Klebeflächen (1) am Airbagmodulgehäuse (2) in einem vom Öffnungsrand (12) der Airbagkammer (6) abgewandten und im Bereich des Bodens (9) der Airbagkammer (6) eine hohe Steifigkeit aufweisenden Übergangsbereich (5) angeordnet sind.

2. Airbagmodul nach Anspruch 1, **dadurch gekennzeichnet, dass** die Schweiß- oder Klebeflächen (1) im wannenartig gekrümmten Übergangsbereich (5) zwischen der Seitenwand (3) und dem Boden (9) vorgesehen sind.

3. Airbagmodul nach Anspruch 1, **dadurch gekennzeichnet, dass** das Airbagmodul (2) eine durch den Boden (9) von der Airbagkammer (6) getrennte Gasgeneratorkammer (4) aufweist, wobei die Schweiß- oder Klebeflächen (1) am Airbaggehäuse (2) im Übergangsbereich zwischen der Airbagkammer (6) und der Gasgeneratorkammer (4) angeordnet sind.

4. Airbagmodul nach einem der Ansprüche 1 bis 3, **dadurch gekennzeichnet, dass** die Schweiß- oder Klebeflächen (1) planar ausgebildet sind.

5. Airbagmodul nach einem der Ansprüche 1 bis 4, **dadurch gekennzeichnet, dass** die Schweiß- oder Klebeflächen (1) mit einer Riffelung oder Waffelung versehen sind.

6. Airbagmodul nach Anspruch 5, **dadurch gekennzeichnet, dass** die Riffelung oder Waffelung beim Schweißvorgang des Airbags (10) durch eine Schweißsonotrode mit riffel- oder waffelartig ausgebildeter Oberfläche hergestellt wird.

7. Airbagmodul nach einem der Ansprüche 1 bis 6, **dadurch gekennzeichnet, dass** außenseitig an den Seitenwänden (3) der Airbagkammer (6) des Airbagmodulgehäuses (2) Halterungsfortsätze (7) angeordnet sind, welche Fortsatznasen (8) aufweisen und in entsprechende Aufnahmeöffnungen (14) im Airbag (10) eingreifen.

8. Airbagmodul nach Anspruch 7, **dadurch gekennzeichnet, dass** die Halterungsfortsätze (7) am Öffnungsrand (12) angeordnet sind.

9. Airbagmodul nach Anspruch 7 oder 8, **dadurch gekennzeichnet, dass** die Halterungsfortsätze (7) einteilig mit der Airbagkammer (6) ausgebildet sind.

10. Airbagmodul nach einem der Ansprüche 1 bis 9, **dadurch gekennzeichnet, dass** das Airbagmodulgehäuse (2) einteilig aus gießfähigem Material, vorzugsweise Kunststoff hergestellt ist.

## Claims

1. Airbag module for motor vehicles, with an airbag module housing (2) comprising an airbag chamber (6) for an airbag (10) which can be inflated by a gas generator into an impact cushion, wherein the airbag chamber (6) is open in the direction of deployment (13) and the edge (11) of the injection opening of the airbag (10) is welded or adhesively bonded to the outside of the airbag module housing (2), **characterised in that** the welding or adhesive bonding faces (1) at the airbag module housing (2) are disposed in a transition area (5) which is remote from the opening edge (12) of the airbag chamber (6) and has a high degree of stiffness in the area of the bottom (9) of the airbag chamber (6).

2. Airbag module according to Claim 1, **characterised in that** the welding or adhesive bonding faces (1) are provided in the transition area (5), which is curved like a trough, between the side wall (3) and the bottom (9).

3. Airbag module according to Claim 1, **characterised in that** the airbag module (2) comprises a gas generator chamber (4) which is separated from the airbag chamber (6) by the bottom (9), wherein the welding or adhesive bonding faces (1) at the airbag housing (2) are disposed in the transition area between the airbag chamber (6) and the gas generator chamber (4).

4. Airbag module according to any one of Claims 1 to 3, **characterised in that** the welding or adhesive bonding faces (1) are of planar formation.

5. Airbag module according to any one of Claims 1 to 4, **characterised in that** the welding or adhesive bonding faces (1) are provided with ribbing or waffling.

6. Airbag module according to Claim 5, **characterised in that** the ribbing or waffling is produced when welding the airbag (10) by a welding sonotrode with a surface formed in a rib- or waffle-like manner.

7. Airbag module according to any one of Claims 1 to 6, **characterised in that** retaining extensions (7) are disposed on the outside of the side walls (3) of the airbag chamber (6) of the airbag module housing (2), which extensions comprise extension lugs (8) and engage in corresponding locating openings (14) in the airbag (10).

8. Airbag module according to Claim 7, **characterised in that** the retaining extensions (7) are disposed at the opening edge (12).

9. Airbag module according to Claim 7 or 8, **characterised in that** the retaining extensions (7) are formed in one part with the airbag chamber (6).

10. Airbag module according to any one of Claims 1 to 9, **characterised in that** the airbag module housing (2) is formed in one part from castable material, preferably a plastics material.

## Revendications

1. Module de coussin gonflable (airbag) pour véhicules, comprenant un boîtier (2) du module de coussin gonflable, qui présente une chambre (6) du coussin gonflable pour un coussin (10) d'airbag gonflable par un générateur de gaz relié à un coussin de prise, dans lequel module la chambre (6) du coussin gonflable est réalisée ouverte dans la direction (13) de dépliage et dans lequel le bord (11) de l'ouverture de gonflage du coussin gonflable (10) est soudé ou collé du côté extérieur du boîtier (2) du module de coussin gonflable, **caractérisé en ce que** les surfaces (1) soudées ou collées sur le boîtier (2) du module de coussin gonflable sont disposées dans une zone de transition (5) opposée au bord (12) d'ouverture de la chambre (6) du coussin gonflable et présentant une rigidité élevée dans la zone de fond (9) de la chambre (6) du coussin gonflable.

2. Module de coussin gonflable selon la revendication 1, **caractérisé en ce que** les surfaces (1) soudées ou collées sont prévues dans la zone de transition (5) courbée en forme de cuve entre la paroi latérale (3) et le fond (9).

3. Module de coussin gonflable selon la revendication 1, **caractérisé en ce que** le module (2) de coussin gonflable comporte une chambre (4) du générateur de gaz séparée de la chambre (6) du coussin gonflable par le fond (9), les surfaces (1) soudées ou collées étant disposées sur le boîtier (2) du coussin gonflable dans la zone de transition entre la chambre (6) du coussin gonflable et la chambre (4) du générateur de gaz.

4. Module de coussin gonflable selon l'une des revendications 1 à 3, **caractérisé en ce que** les surfaces (1) soudées ou collées sont réalisées selon une forme générale plane.

5. Module de coussin gonflable selon l'une des revendications 1 à 4, **caractérisé en ce que** les surfaces (1) soudées ou collées sont munies d'un rainurage ou d'un gaufrage.

6. Module de coussin gonflable selon la revendication 5, **caractérisé en ce que** le rainurage ou le gaufrage est réalisé au cours du procédé de soudage du coussin gonflable (10) par une sonotrode présentant une surface rainurée ou gaufrée.

7. Module de coussin gonflable selon l'une des revendications 1 à 6, **caractérisé en ce que**, du côté extérieur, sur les parois latérales (3) de la chambre (6) du coussin gonflable du boîtier (2) du module de coussin gonflable, sont disposés des prolongements (7) de retenue, qui comportent des becs (8) de prolongement et qui s'engagent dans les ouvertures (14) de réception ménagées dans le coussin gonflable (10).

8. Module de coussin gonflable selon la revendication 7, **caractérisé en ce que** les prolongements de retenue (7) sont disposés sur le bord (12) de l'ouverture.

9. Module de coussin gonflable selon la revendication 7 ou 8, **caractérisé en ce que** les prolongements de retenue (7) sont réalisés monobloc avec la chambre (6) du coussin gonflable.

10. Module de coussin gonflable selon l'une des revendications 1 à 9, **caractérisé en ce que** le boîtier (2) du module de coussin gonflable est réalisé monobloc en matériau apte à être moulé, de préférence en matière plastique.
